# EUROPÄISCHE PATENTANMELDUNG

(11) **EP 1 306 628 A2**
(43) Veröffentlichungstag der Anmeldung: **02.05.2003**
(21) Anmeldenummer: 02023559.4
(22) Anmeldetag: 22.10.2002
(51) Int. Cl.: F24J 2/22, F28F 3/12

(54) **Solarabsorber und andere flache Wärmetauscher**

(30) Priorität: 23.10.2001 DE 10151552
(71) Anmelder: Kirschmann, Eduard, 30459 Hannover (DE)
(72) Erfinder: Kirschmann, Eduard, 30459 Hannover (DE)

(57) **Zusammenfassung**

**2.1.** Wärmetauscher haben die Aufgabe bei möglichst geringem Material- Fertigungs- und Installationsaufwand einen möglichst guten Wärmeaustausch zwischen dem Wärmeträgermedium und den Wärmetauscherwänden zu gewährleisten.
**2.2.** Der Wärmetauscher besteht im einfachsten Fall lediglich aus zwei aufeinander liegenden, gerippten Folien (1) und (2), wodurch der Materialaufwand minimiert wird. Die Folien müssen lediglich aussen miteinander verklebt oder verschweisst werden, dies bedeutet einen extrem geringen Fertigungsaufwand.
   Die sich überkreuzenden Rippen (4) der oberen Folie (1) und (3) der unteren Folie (2) halten für das Wärmeträgermedium einen schmalen Spaltraum offen, dessen Geometrie für eine gleichmässige Durchströmung des gesamten Wärmetauschers sorgt, wenn Zu- und Ableitung an diagonal gegenüberliegenden Ecken erfolgt. Da praktisch die gesamte Wärmetauscheroberfläche durchströmt wird, findet Wärmeleitung nur über sehr kurze Strecken in der Grössenordnung der Dicke der Folien statt.
**2.3.** Bau von Solarabsorbern, Solarkollektoren, Kühlern, Heizkörpern.

## Beschreibung

Die Erfindung betrifft Solarabsorber und andere, flache Wärmetauscher für Kühl- und Heizzwecke. Anwendungsbeschränkungen ergeben sich lediglich, wenn aus technischen Gründen unmöglich ist im Inneren des Wärmetauschers einen Unterdruck zu erzeugen.

Solarabsorber von Flachkollektoren bestehen in der Regel aus teuren, gut Wärme leitenden Metallen, die die Wärme nicht nur von aussen nach innen leiten, sondern auch über Entfernungen von mehreren Zentimetern seitwärts bis zum nächsten vom Wärmeträgermedium durchflossenen Kanal oder Röhrchen. Aus schlecht Wärme leitenden Kunststoffen bestehende Schwimmbadabsorber sind aus lauter parallel verlaufenden, eng aneinanderliegenden Röhrchen aufgebaut, von denen jedes einzelne über eine Zu- und eine Ableitung verfügen muss.

Der im Patentanspruch 1 angegebenen Erfindung liegt das Problem zugrunde bei geringerem Material- Fertigungs- und Installationsaufwand den gesamten Wärmetauscher gleichmässig vom Wärmeträgermedium durchströmen zu lassen. Die Entfernung von einem beliebigen Punkt der Wärmetauscheroberfläche zum Wärmeträgerfluid soll in der Grössenordnung von 1 mm liegen, um Wärmeleitung über grössere Entfernungen zu vermeiden und kostrengünstigere, schlecht leitende Werkstoffe, insbesondere Kunststoffe, verwenden zu können. Insbesondere bei Solarabsorbern soll dabei der gesamte Inhalt an Wärmeträgermedium im Absorber möglichst gering sein, damit der Absorber schnell auf Witterungsänderungen reagieren kann.

Diese Aufgabe wird durch die im Patentanspruch 1 aufgeführten Merkmale gelöst.

Der Wärmetauscher besteht im einfachsten Fall nur aus zwei aufeinander liegenden, gerippten Folien, wodurch der Materialaufwand minimiert wird. Die Folien müssen lediglich aussen miteinander verklebt oder verschweisst werden, dies bedeutet einen extrem geringen Fertigungsaufwand. Die Gitterstruktur der nach innen weisenden Rippen sorgt bei Unterdruck im Innern in dem Fall, dass Zu- und Abfluss des Wärmeträgermediums an diagonal gegenüberliegenden Ecken erfolgt, für eine gleichmässige Durchströmung der gesamten Fläche. Dabei fliesst das Wärmeträgermedium innen an der gesamten Fläche der Wärmetauscherwände vorüber. Darüber hinaus kann eine deutliche Kostenersparnis erzielt werden, wenn teure Metallfolien verwendet werden sollen. In diesem Fall können dünne Metallfolien mit einem innenliegenden Kunststoffgitter kombiniert werden. Hierbei kommt es zur Kostenminimierung durch Aufteilung der Aufgaben. Die teure Metallfolie übernimmt die Wärmeleitung, während der billige Kunststoff für die funktionsgerechte Geometrie des Wärmetauschers, insbesondere für die gleichmässige Verteilung des Wärmeträgermediums sorgt.

Ein Ausführungsbeispiel der Erfindung ist in der Zeichnung dargestellt und wird im Folgenden näher beschrieben.

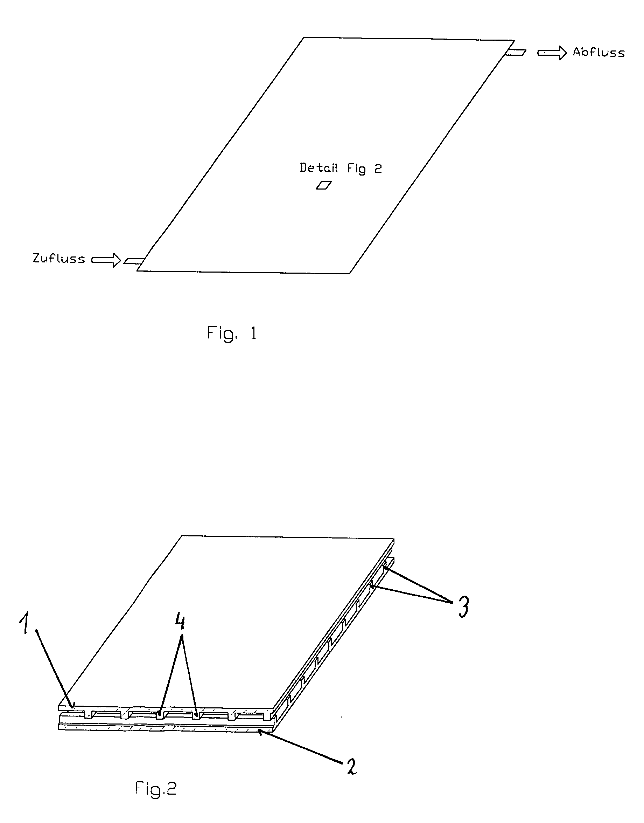

Die Figur 1 zeigt einen Schwimmbadabsorber. Dieser wird von oben durch die Sonnenstrahlung erwärmt und gibt die Wärme weiter an das hindurchfliessende Wasser, wobei im Absorber ein geringerer Druck herrschen muss, als der Aussendruck. Dies kann man bereits dadurch erreichen, dass der Absorber oberhalb der Wasseroberfläche im Schwimmbad und die Pumpe im Förderkreis hinter dem Absorber positioniert wird. Figur 2 zeigt einen Schnitt durch den Absorber zur Erläuterung der Funktionsweise.

Das Wasser durchströmt den Absorber global betrachtet von links unten nach rechts oben. Lokal kann es aber nur entweder zwischen zwei Rippen (4) der oberen Folie durch einen Spaltraum über einer Rippe (3) der unteren Folie nach oben fliessen oder zwischen zwei Rippen (3) der unteren Folie durch einen Spaltraum unter einer Rippe (4) der oberen Folie hindurch nach rechts fliessen. Der direkte Weg von links unten nach rechts oben ist lokal versperrt, da in dieser Richtung die Rippen beider Folien aufeinander liegen und keinen Spaltraum offen lassen. Unabhängig vom eingeschlagenen Weg von links unten nach rechts oben muss das Wasser die gleiche Gesamtzahl identischer Spalträume von unten nach oben und die gleiche Gesamtzahl identischer Spalträume von links nach rechts passieren. Dies sorgt für eine gleichmässige Verteilung der Strömung über die gesamte Absorberfläche.

In einem Abstand von 5 mm angebrachte, 1 mm hohe Rippen erfüllen sehr gut die beschriebenen Aufgaben. Damit ergibt sich für den Schwimmbadabsorber eine niedrige Gesamtwassermenge deutlich unterhalb von 2 Litern pro Quadratmeter und daher sehr gute dynamische Eigenschaften.

## Patentansprüche

1. Solarabsorber und andere flache Wärmetauscher, **gekennzeichnet durch** folgende Merkmale:
- Wärmetauscherwände in Form von zwei aufeinander liegenden, an den Rändern miteinander dicht verbundenen Folien
- ein innenliegendes, aus aufeinanderliegenden Stäben bestehendes Gitter oder nach innen weisende, sich überkreuzende Rippen der Wärmetauscherwände.
- einen Anschluss für die Zuleitung des Wärmeträgerfluids an einer Ecke des Wärmetauschers und einen Anschluss für dessen Abfluss an der diagonal gegenüberliegenden Ecke
- einen geringeren Druck im Inneren des Wärmetauschers als ausserhalb
